Europäisches Patentamt

European Patent Office

Office européen des brevets

(19)

(11) Publication number: **0 109 588**
A2

(12)

# EUROPEAN PATENT APPLICATION

(21) Application number: 83110904.6

(22) Date of filing: 02.11.83

(51) Int. Cl.³: **H 01 M 4/72**
H 01 M 4/20, H 01 M 4/76
H 01 M 4/22

(30) Priority: 04.11.82 DE 3240711

(43) Date of publication of application:
30.05.84 Bulletin 84/22

(84) Designated Contracting States:
AT BE CH FR GB LI LU NL SE

(71) Applicant: Terzaghi, Giovanni
Via Val di Sole 22
Milano(IT)

(71) Applicant: Faber, Peter
Triererstrasse 9
D-8757 Karlstein(DE)

(72) Inventor: Terzaghi, Giovanni
Via Val di Sole 22
Milano(IT)

(72) Inventor: Faber, Peter
Triererstrasse 9
D-8757 Karlstein(DE)

(74) Representative: Beyer, Werner, Dipl.-Ing.
Staufenstrasse 36, II P.O. Box 174109
D-6000 Frankfurt/Main(DE)

(54) A profile embossed grid electrode for storage batteries and process for its manufacturing.

(57) A profile-embossed grid electrode for storage batteries provided with parallel linear grooves on both surface and comprising a perforated metal conductor grid and a matching latticed plastic structure comprising parallel meshes. The metal-plastic grid is filled with the active material and it is covered on both sides with a woven or non-woven fabric. The electrode is then embossed on both sides with a tool profiled with ribs at the locations coincident with the vertically meshes. After embossing the vertical meshes retain the embossed grooves permanently on the electrode surface, giving vertical channels for the acid convenction and produce a self constrained tubular-shaped electrode.

EP 0 109 588 A2

## FIELD OF THE INVENTION

The present invention relates to a profile embossed grid electrode for storage batteries and to a process for its manufacturing. Particularly, the present invention relates to a metal plastic composite grid electrode provided with linear grooves on both surfaces and suitable to retain the grid plate phisical dimensions and production systems and to achieve the cycling life of a tubular plate.

## DESCRIPTION OF THE PRIOR ART.

As known, for the storage lead-acid batteries, specially of the traction type, both tubular and flat plate electrodes are used. For many years now, so-called tubular plates have been used as positive electrodes in lead storage batteries of both the stationary and traction types. Such tubular plates are also known as "ironclad plates".

Positive tubular plates consist of a series of porous plastic tubes having an outside diameter of about 9 mm. and disposed parallel to one another, which tubes are filled with lead oxide after the insertion of central round grid rods of a corrosion-resistant lead alloy.

The plastic tubes generally used are made, for example, of acid-proof, chlorine-free fibers. Fibers of glass, polypropylene, or polyester are preferred for their excellent durability as disclosed in U.S. Patent 4048399  B.P. 1599089.

Fabric of multifilament polyester yarn having wall thicknesses of from 0,3 to 0,4 mm. and pore openings of less than 0,2 mm. are commercially available at the present time in the form of multitube bags for tubular-plate batteries.

One advantage of tubular-plate batteries, as compared with those having conventional pasted flat plates, is their long life in cyclical operation. For example, tubular plate batteries can with stand from 1000 to 2000 charge-discharge cycles, whereas batteries having conventional pasted plates, in comparison, can withstand only 400 to 800 cycles in the same operating conditions.

It is believed that the reason is that, in the case of tubular plates, the positive active material, consisting of lead dioxide powder, is firmly hold within the tubes and therefore cannot be shedding from the electrode.

It is known in fact that the life of electric lead-acid storage batteries is closely bound to the shedding of the active mass from the positive plate and to the corrosion of the lead alloy conductive spine; both these effects are caused by the mechanical strains xhich are related to the changes in volume of the active mass, to the overcharge of the elements and to the vibrations to which a battery is sometimes sunjected.

In order to avoid a rapid failure of the batteries made with conventional pasted flat plastes, attempts have been made to reduce the above mentioned disadvantages keeping the active mass compact and pressed against the grid.

This effect may be obtained by inserting between the negative and the positive plates some glass separators, which are put against the two sides of the positive plate or they can be folded around the positive plate in two or three plies to wrap it completaly, or by using PVC distancers able to support the active mass.

Shrinkable envelope retainers for flat plates, made in one operation by a textile process from chemically resistant, polyester fiber have been proposed in BP 2064854 for keeping the active mass compact and pressed against the grid.

It is known, however, that the capacity of a plate would depend on the amount of active material and accessibility to this active material from the acid in the required rate, while any phenomena capable of slowing down or reducing acid diffusion would result in a higher voltage fall and in a capacity reduction of the battery.

Metal-plastic composite electrodes, suitable for manufacturing armoured flat-plate electrodes, are known from German Patents 27 10 907 and 27 10 903. Moreover, metal-plastic composite grids are known from German Patents 20 58 705 and 25 00 977.

The main disadvantage of the flat electrode, especially under high current demand, is the restricted acid convection due to the narrow interelectrode spacing. In the tubular electrode configuration a triangular section space exists vertically between the tubes, through which the acid can freely circulate. All flat electrodes however, have to be compressed tightly together in the cell element, such that once acid is expelled from the active material during charging little convection occurs.

This impairs the supply of the acid required during successive high current discharges.

SUMMARY OF THE INVENTION

An object of this invention is to generate free space for acid movement between adjacent electrodes, without relinquishing the advantages of the flat-plate armouring.

According to the present invention, this and other objects are achieved by a profile embossed grid electrode consisting of a perforated, metal conductor grid and a matching latticed plastic structure and provided with parallel linears grooves on both surface. The profile embossed grid electrode, subject matter of the present invention, establishes all of the required electrochemical and mechanical features of the composite structure and at the same time satisfies the need for a profiled plate surface, achieving these combined requirements in a reliable and easy manner. The embossed indentations in the surface of the flat encapsulated electrode of the present invention are, preferably, internally bonded to a plastic sheleton, in order to avoid that the indentations would revert and level out due to the stresses arising from the

- 4 -

volume changes occurring in the active material during charging 0109588 discharging.

The metal grid comprises a lattice of parallel bars oriented in the direction of the grid lug and traversing smaller section cross meshes. The plastic structure consists of a lattice of vertical parallel plastic strands, trapezoidal in section, transversally connected by smaller cross section webbing to space the strands at the appropriate pitch. This plastic structure matches the grid geometry, minus the lug, and it is positioned within the perforation of the grid lattice.

It provides an enveloped edge and may consist of two parts which are held mechanically together on the vertical mesh lines by thermal or ultrasonic welding or by mechanical bonding with spot or in-line clips. The plastic structure may be also produced in one piece around the grid by a die-casting process. The plastic material for producing the plastic structure may be any thermoplastic material, even if low-melting material are preferred. Among the low-melting material, polyolifines and particularly polyethylene or polypropylene are particularly preferred.

The double grid, consisting of a perforated conductor grid and latticed plastic structure, is then pasted by any standard pasting technic by using either positive or negative paste.

The electrode thus obtained is covered on both sides with a plastic woven material or plastic felt, preferably made of polyester fibres and then heat treated under pression in order to compound the woven or felt maetrial, with the surface exposed parts of the plastic structure. The covering may be a synthetic porous separator material having pores diameters ranging from o,o1 to 1oo microns and then it is heat treated under pressure.

The temperature and pressure valves used in the heat-treatment depend on the plastic materials constituting the covering and retaining material and the inner frame. Thus, when the covering material is made of polyester fibres and the inner frame of polypropylene, suitable and preferred conditions for the heat-treatment are:

- 5 -

Temperature: 170-180°C

Pressure: 3-5 Kg/cm$^2$

Time: 3-5 minutes

Over the total electrode surface, on both sides, heat sealing along the lines of the vertical plastic meshes is achieved using a profiled embossing tool coinciding with these lines, grooves being generated in the electrode surface as a consequence.

DESCRIPTION OF THE DRAWINGS.

One way of carrying out the present invention is described in detail below with reference to drawings which illustrates one preferred, non-limiting embodiment thereof, in which:

- figure 1 is a schematic view of the perforated metal conductor grid;

- figure 2 is a schematic view of the matching latticed plastic structure;

- figure 3a is a side cross-sectioned view of the metal conductor grid of figure 1 taken along line A-A of figure 1;

- figure 3b is a side cross-sectioned view of the plastic structure of figure 2 taken along line A-A of figure 2;

- figure 3c is a side cross-sectioned view of the profile embossed flat electrode of the present invention;

- figure 4a is the side cross-sectioned view of the profile embossed flat electrode of figure 3a after pasting, drying and covering with a woven material or felt;

- figure 4b is the side cross-sectioned view of the profile embossed flat electrode of figure 4a after embossing;

- figure 4c is a schematic view of the embossing operation;

- figure 5a is the frontal schematic view of the embossing tools; and

- figure 5b is the profile of the embossing tools of figure 5a in the closed position.

DESCRIPTION OF THE PREFERRED EMBODIMENT.

The profile embossed composite electrode of the present invention

- 6 -

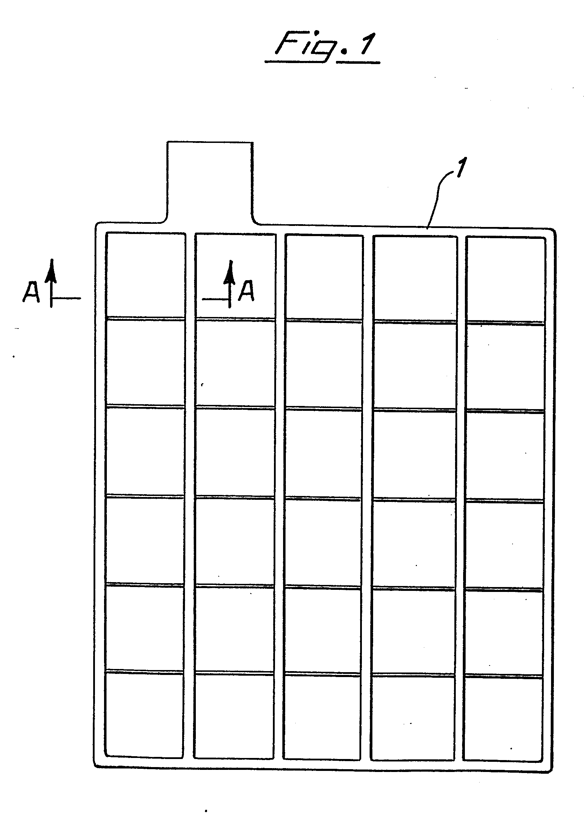

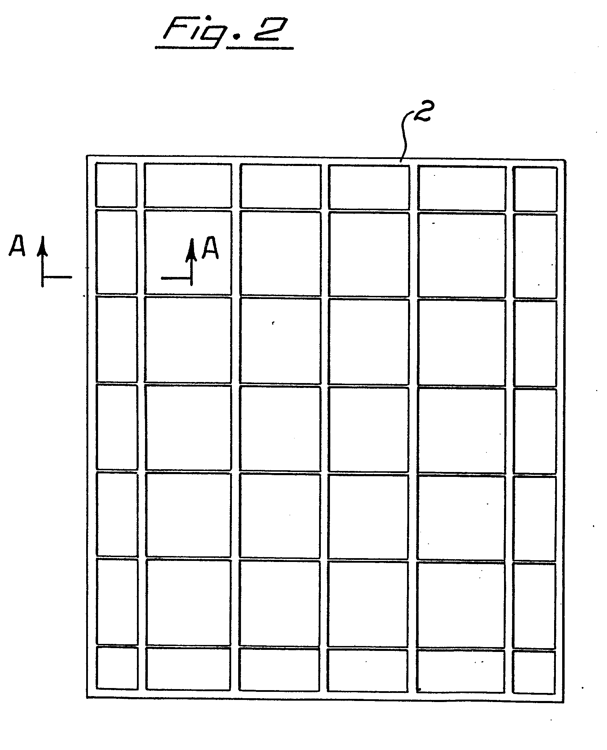

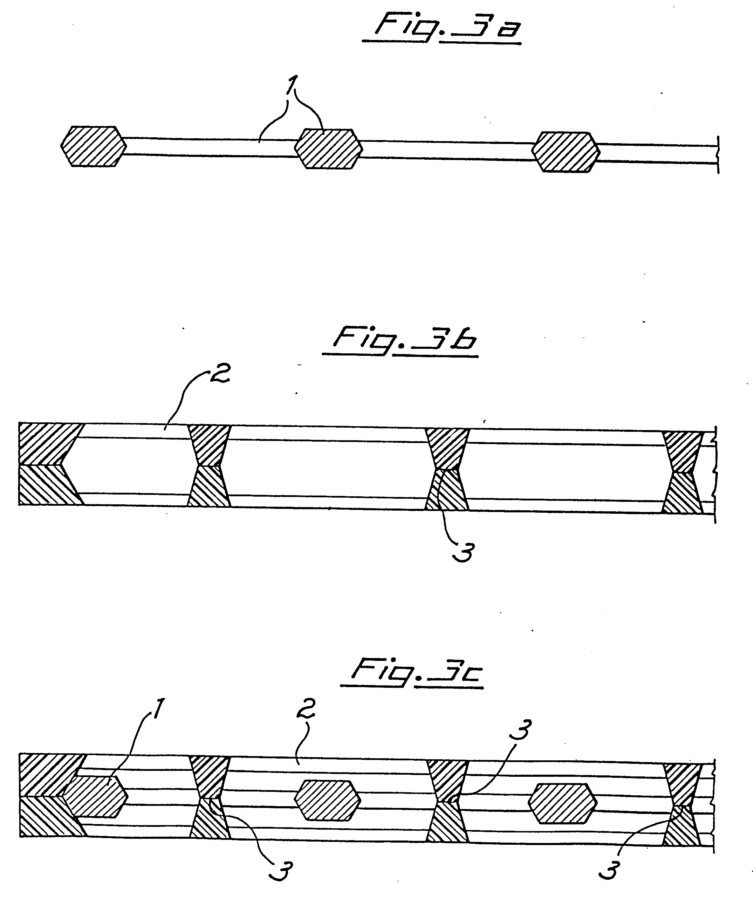

employs, as one of its principle features, the design metal framework illustrated in fig. 1. The main current carrying grid members which are transposed in a vertical direction are, preferably, approximately 1.8 - 2.8 mm thick; and for mechanical stability in larger plates, thinner, approximately 1 - 1.4 mm thick horizontal cross members are provided. The plastic reinforcing structure of fig. 2 will then be assigned to the metal grid, so that the vertical strands of the plastic mesh are transposed parallel to but midway between the vertical grid spines. The vertical plastic strands (2) are trapezoidal in section and greater in sectional area than the horizontal, circular cross section webbing, which serves only to space the vertical strands at the appropriate pitch. Moreover, with a two-part (one framework on each side) "sandwich" layer, as shown in figure 3b, the vertical meshes align back-toback with each other and are subsequently bonded together by thermal or ultrasonic welding or by mechanical bonding with spot o in-line clips (3).

The outer frame of the plastic framework envelopes the perimeter of the metal grid. Subsequently, during the latter stages of plate manufacture, an active material retaining mat can be bonded, by hot or ultrasonic or by mechanical bonding with spot o in-line clips, to the outer plastic frame, which also serves to protect the edges of the metal grid against corrosion.

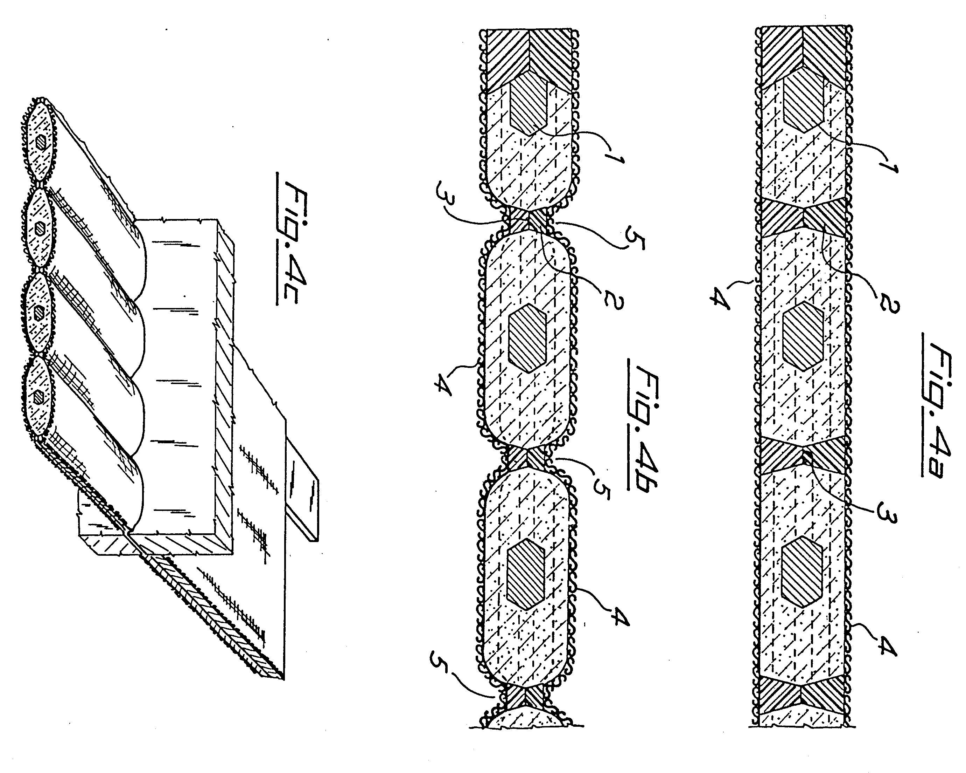

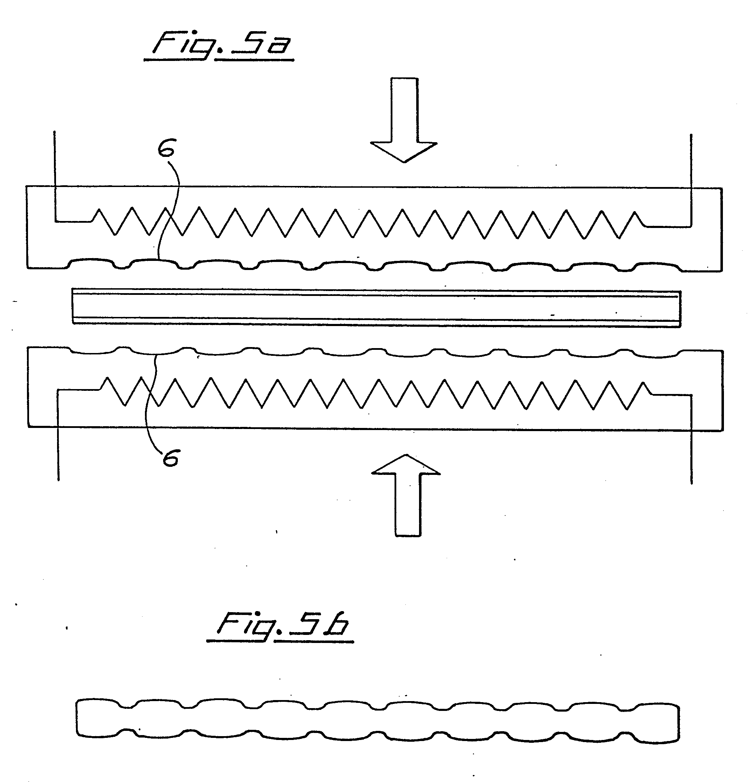

A preferred grid electrode structure is described hereafter with reference to figure 3c. Firstly, the metal conductor (1) is surroubded with the plastic structure (2), which is preferably a polyolefine material, and then the pasting operation is carried out. After pasting, drying and separate preformation, if required carried out according the known procedures, the retainer maetrial (4), in the form of a woven material or felt, preferably of polyester, is applied to both sides of the flat electrode body (fig. 4a) and thermally sealed. This sealing operation is undertaken in a completely different manner compared with the previously proposed planar hot pressing process.
In this invention the press tool faces 6 are profiled such that they
have ridges at the locations coincident with the vertically running
plastic meshes (fig. 5).

The use of such a tool results in an embossed groove (5) on the plate
surface. The plastic interior structure is thereby being compressed
in a more linear manner than when being enveloped. Furthermore, the
active mass experiences a more stable compression. After embossing,
the vertical mesh retains the embossed groove permanently on the
electrode surface, giving within the composite plate nummerous 1 - 2
mm wide channels (5) for the acid convection.

The technical advantage of this construction is to be found in the
stability of the surface grooving imparted by the inner structure
resulting in the avoidance of the undesirable acid stratification
encountered in flat-plate electrode batteries. Furthermore, the
proposed profile embossed electrode provides all the advantages
for automatic production as with the metal-plastic composite electrode
according to German patent 27 10908. With regard to its thin structure
(suitable for high power density batteries), amenability to automatic
pasting, and effective retention of the active mass (achieved by
sealing with conventional polyester woven material already proven
with tubular electrodes), the electrode of the present invention
with its acid convection grooves is superior to the conventional
tubular electrode design.

The proposed, profile embossed electrode can be used for the negative
as well as for the positive plate.

Consequently, a more economical production means for a traction
battery is now possible, which by the correct selection of the
plastic, can also withstand a constant operational temperature of
70°C with cooling.

A non-limiting example of manufacturing the present profile embossed electrode will be hereinafter described.

A flat, up to 2.6 mm thick, perforated conductor grid of lead or lead alloy is enveloped with a plastic frame of polypropylene or polyester.

This is done with a two-part plastic grid in such a way, that the metal grid is sandwiched between the plastic frames. Under a linearly moving ultrasonic sonotrode both plastic frames are then being welded together in the direction of its vertical meshes as well as on the surrounding frame. At the thin horizontal cross meshes no welding takes place. Then the active mass is applied, either manually or by mass production techniques using automated pasting machines. Afterwards the paste can be formed. In the case of box formation, the pasted mass will be dried at 120°C, the surface cleaned of any excess paste, such that the plastic structure becomes visible. The retainer material can then be presented to the pasted electrode and positioned between the two embossing tools (fig. 5). The embossing tools are profiled to have linear ridges xhere the vertical meshes of the plastic structure are arranged. The embossing and sealing operation is done at 170 to 180°C within approximately 3-5 mins at a pressure of 3-5 kp/cm$^2$. After the embossing the electrode can be interleaved with negatives and formed. Preferably, the porous fabric has the yarns running in the cross direction of the vertical plastic strands made of continuous multifilaments so that after the embossing each of said yarns is connected to all vertical plastic strands.

WHAT IS CLAIMED IS

1. A profile-embossed grid electrode provided with parallel linear grooves on both surfaces and comprising a perforated, metal conductor grid and a matching latticed plastic structure.

2. A profile-embossed grid electrode provided with parallel linear grooves on both surfaces, according to claim 1, wherein, the metal grid consists of lattice of parallel bars oriented in the direction of the grid lug and traversing smaller section cross meshes.

3. A profile-embossed grid electrode provided with parallel linear grooves on both surfaces, according to claim 1, wherein, the plastic latticed structure consists of vertical parallel plastic strands, trapezoidal in section, transversally connected by smaller cross section webbing to space the strands at the appropriate pitch.

4. A profile-embossed grid electrode provided with parallel linear grooves on both surfaces, according to claim 1 wherein the plastic latticed structure matches the grid geometry, minus the lug, and its vertical strands are positioned between the conductive bars of the metal grid lattice.

5. A profile-embossed grid electrode provided with parallel linear grooves on both surfaces, according to claim 4, wherein the plastic structure provides an enveloped edge.

6. A profile-embossed grid electrode provided with parallel linear grooves on both surfaces, according to claim 1, wherein the plastic structure consists of two parts, which are held mechanically or phisycally together on the vertical strands of the mesh through the perforations of the metal grid lattice.

7. A profile-embossed grid electrode provided with parallel linear grooves on both surfaces, according to claim 6, wherein the two parts of the plastic structure is held together by in-line clips.

8. A profile-embossed grid electrode provided with parallel linear

grooves on both surfaces, according to claim 1, wherein the plastic structure is produced in one piece around the grid by a die-casting process.

9. A profile-embossed grid electrode provided with parallel linear grooves on both surfaces, according to claim 1, wherein the metal and plastic grid casting is pasted with a positive paste.

10. A profile-embossed grid electrode provided with parallel linear grooves on both surfaces, according to claim 1, wherein the metal and plastic grid casting is pasted with a negative paste.

11. A profile-embossed grid electrode provided with parallel linear grooves on both surfaces, according to claim 9 or 10, wherein the pasted electrode is covered on both sides with a retaining synthetic woven material or synthetic felt and heat pressed in order to compound the woven material with the surface exposed parts of the plastic structure.

12. A profile-embossed grid electrode provided with parallel linear grooves on both surfaces, according to claim 1 and 11 wherein the plastic structure consists of polyolefine and the retainer material is made of polyester fabric.

13. A profile-embossed grid electrode provided with parallel linear grooves on both surfaces, according to claim 12, wherein the polyester retaining material is combined with the inner polyolefine structure at a temperature of 170°C to 180°C, at a pressure of 3 to 5 K/cm$^2$ and for 3 to 5 min.

14. A profile-embossed grid electrode provided with parallel linear grooves on both surfaces, according to claim 11, wherein over the total electrode surface, on both sides, heat sealing along the lines of the vertical plastic meshes is achieved using a profiled embossing tool provided with ribs coinciding with these lines, grooves being generated in the electrode surface as a consequence.

15. A profile-embossed grid electrode provided with parallel linear

grooves on both surfaces, according to claim 14, wherein all the electrode surface, on both sides, is provided with parallel linear grooves, corresponding to linear sealings, said grooves resulting diagonal in respect to the grid plug axis.

16. A profile-embossed grid electrode, especially electrode for lead-acid industrial batteries, provided with parallel linear grooves on both surfaces, comprising a plurality of vertical spaced conductive bars, which are interconnected by transverse connecting meshes, and a plurality of vertical spaced plastic strands, positioned each between two adjacent conductive bars, each separate conductive bar being surrounded by an active material, the latter having the surface covered by a porous polyester fabric permeable to the electrolyte, each portion of active mass with its conductive bar being separate from the next adjacent portion of the active mass by the two plastic strands, to which the outer porous fabric is embossed, creating locally a linear groove, both surfaces of the embossed electrodes having so parallel spaced grooves.

17. A profile-embossed grid electrode provided with the parallel linear grooves on both surfaces according to claim 9 or 1o, wherein the pasted electrode is covered on both sides with a synthetic porous separator material having pores' diameter ranging from o,o1 to 1oo microns and heat pressed.

18. A profile-embossed grid electrode provided with parallel linear grooves on both surfaces particularly suitable for lead-acid industrial batteries according to claim 16, wherein the porous fabric has the yarns running in the cross direction of the vertical plastic strands made of continuous multifilaments so that after the embossing each of said yarns is connected to all vertal plastic strands.

_Fig.1_

Fig. 2

_Fig. 3a_

_Fig. 3b_

_Fig. 3c_

## Fig.4a

## Fig.4b

## Fig.4c

## Fig.5a

## Fig.5b